Europäisches Patentamt

European Patent Office

Office européen des brevets

(19)

(11) Veröffentlichungsnummer: **0 102 048**
**B1**

(12) **EUROPÄISCHE PATENTSCHRIFT**

(45) Veröffentlichungstag der Patentschrift:
09.03.88

(51) Int. Cl.⁴: **G 21 C 19/06**

(21) Anmeldenummer: 83108265.6

(22) Anmeldetag: 22.08.83

(54) Wasserbecken zum Lagern von Kernreaktorbrennelementen.

(30) Priorität: 01.09.82 DE 3232539

(43) Veröffentlichungstag der Anmeldung:
07.03.84 Patentblatt 84/10

(45) Bekanntmachung des Hinweises auf die Patenterteilung:
09.03.88 Patentblatt 88/10

(84) Benannte Vertragsstaaten:
AT DE IT SE

(56) Entgegenhaltungen:
DE - A - 2 743 453
DE - A - 2 758 670
DE - A - 2 946 004
US - A - 4 071 376

NUCLEONICS, Band 16, Nr. 7, Juli 1958, Seiten 104-105;
R.L. ROD: "Recent advances in ultrasonic decontamination"

(73) Patentinhaber: **Siemens Aktiengesellschaft Berlin und München, Wittelsbacherplatz 2, D-8000 München 2 (DE)**

(72) Erfinder: **Musiol, Werner, Falkenstrasse 40, D-8520 Erlangen (DE)**
Erfinder: **Knecht, Klaus, Lachnerstrasse 40, D-8520 Erlangen (DE)**
Erfinder: **Henzel, Norbert, Dr., Rathsbergerstrasse 34, D-8520 Erlangen (DE)**

## Beschreibung

Die Erfindung betrifft ein Wasserbecken zum Lagern von Kernreaktorbrennelementen mit einem Gerät zum Haltern eines Kernreaktorbrennelementes an einem Ende und Transportieren dieses Kernreaktorbrennelementes im Wasserbecken.

Es ist üblich, ein solches Wasserbecken dem Kernreaktor eines Kernkraftwerkes zuzuordnen (DE-A-2758670). In diesem Wasserbecken kann man aus dem Kernreaktor entladene, bestrahlte Kernreaktorbrennelemente inspizieren und lagern, bis sie schliesslich entweder wieder in den Kernreaktor eingesetzt oder zur Wiederaufarbeitung abtransportiert werden. Diese Kernreaktorbrennelemente weisen im wesentlichen ein Brennelementgerüst auf, in dem den eigentlichen Kernbrennstoff enthaltende Brennstäbe gehalten sind. Diese Brennstäbe weisen ein an beiden Enden gasdicht verschlossenes Hüllrohr aus Metall auf, in dem der Kernbrennstoff, z.B. $UO_2$, in Tablettenform angeordnet ist.

Es hat sich herausgestellt, dass sich während des Einsatzes im Kernreaktor auf der Oberfläche des Brennelementskelettes und der Hüllrohre der Brennstäbe häufig Ablagerungen bilden, die radioaktiv sind und die, was insbesondere die Ablagerungen auf der Oberfläche der Hüllrohre anbelangt, den Wärmeübergang vom Kernbrennstoff in den Hüllrohren der Brennstäbe an das Arbeitsmittel im Kernreaktor behindern können. Diese Ablagerungen können aber auch unkontrolliert von dem Kernreaktorbrennelement abfallen und das Wasserbecken oder Transportbehälter kontaminieren.

Der Erfindung liegt die Aufgabe zugrunde, diese Ablagerungen auf der Oberfläche des Brennelementskelettes und der Hüllrohre der Brennstäbe rechtzeitig zu entfernen, so dass sie nicht unkontrolliert verschleppt werden können.

Zur Lösung dieser Aufgabe ist ein Wasserbecken der eingangs erwähnten Art erfindungsgemäss dadurch gekennzeichnet, dass ein oben offenes und dort mit dem Wasserraum des Wasserbeckens kommunizierendes, am Boden geschlossenes Gefäss einen langgestreckten vertikalen Schacht zum Einführen eines Kernreaktorbrennelementes bildet, an dem oben zum Beseitigen von Ablagerungen von dem Kernreaktorbrennelement ein in den Schacht abstrahlender Ultraschallschwinger und/oder in den Schacht gerichtete Sprühdüsen für Wasser angebracht sind und der am Boden mit einem in den Schacht mündenden Absauganschluss versehen ist, dem eine Absaugpumpe und ein in einer Abschirmkammer befindliches Filter für aus dem Schacht abgesaugte feste Ablagerungen zugeordnet sind.

Ein aus einem Kernreaktor entladenes bestrahltes Kernreaktorbrennelement kann dann mit dem Gerät zum Haltern vertikal in den langgestreckten Schacht eingeführt und aus diesem Schacht wieder herausgezogen werden. Hierbei passiert das Kernreaktorbrennelement der Länge nach den Ultraschallschwinger und/oder die Sprühdüsen, die oben am Schacht angebracht sind. Mit Hilfe des vom Ultraschallschwinger ausgesandten Ultraschalls werden insbesondere fest haftende Ablagerungen von der Oberfläche des Kernreaktorbrennelementes entfernt, während mit dem durch die Sprühdüsen auf die Oberfläche des Kernreaktorbrennelementes gesprühten Wasser insbesondere locker haftende Ablagerungen von der Oberfläche des Kernreaktorbrennelementes abgesprüht werden. Die Ablagerungen sammeln sich am Boden des Schachtes an und werden dort mit Hilfe der Absaugpumpe abgesaugt und schliesslich im in der Abschirmkammer befindlichen Filter abgefiltert. Auf diese Weise wird eine unkontrollierte Verbreitung dieser radioaktiven Ablagerungen im Wasserbecken oder später in einem Transportbehälter für das Kernreaktorbrennelement vermieden.

Aus «Nucleonics» Vol. 16, No. 7, Seite 105 ist ein langgestreckter, am Boden abgeschlossener Tank ohne Absauganschluss bekannt, der am offenen Oberende Ultraschallschwinger aufweist und in den ein Kernreaktorbrennelement zum Dekontaminieren eingesetzt wird. Dieser Tank ist mit einem Lösungsmittel gefüllt, kommuniziert aber nicht mit dem Wasserraum eines Wasserbeckens.

Aus DE-A-2 743 453 ist ferner ein Lagerbehälter unter Wasser in einem Wasserbecken bekannt, der nach Einsetzen eines Kernreaktorbrennelementes mit einem Deckel verschlossen wird und der Wasserabsaug- und Wasserzuführleitungen zum Überwachen des Zustandes des Kernreaktorbrennelementes aufweist.

Die Erfindung und ihre Vorteile seien anhand der Zeichnung an zwei Ausführungsbeispielen näher erläutert:

Fig. 1 zeigt schematisiert einen Längsschnitt durch ein erfindungsgemässes Wasserbecken mit einem Ultraschallschwinger zum Entfernen von Ablagerungen auf der Oberseite eines Kernreaktorbrennelementes,

Fig. 2 zeigt ebenfalls stark schematisiert einen Längsschnitt durch ein erfindungsgemässes Wasserbecken mit Wasserdüsen zum Entfernen von solchen Ablagerungen.

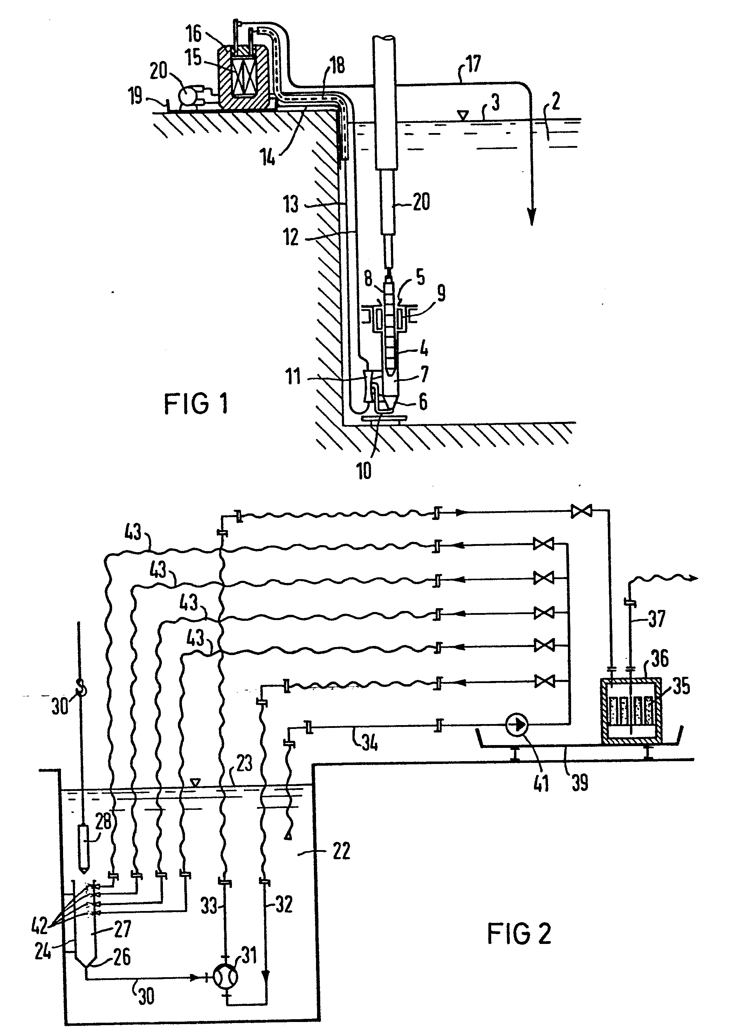

In Fig. 1 ist ein Wasserbecken 2 mit Wasser gefüllt, das einen Wasserspiegel 3 hat. Am Boden dieses Wasserbeckens 2, d.h. unterhalb des Wasserspiegels 3 ist ein aus Metall bestehender Hohlzylinder 4 mit vertikaler Längsachse angeordnet. Dieser Hohlzylinder 4 hat oben eine Öffnung 5, d.h. ist oben offen und am Boden 6 verschlossen. Auf diese Weise bildet der Innenraum des Hohlzylinders 4 einen Schacht 7 zum Einführen eines langgestreckten Kernreaktorbrennelementes 8.

An seinem Oberende, d.h. in der Nähe der Öffnung 5, weist der Hohlzylinder 4 einen Ultraschallschwinger 9 auf, der Ultraschall in den Schacht 7 abstrahlt. Am Boden 6 des Hohlzylinders 4 mündet ein Absauganschluss 10 in den Schacht 7. Dieser Absauganschluss 10 ist zu einer ebenfalls unter Wasser befindlichen Wasserstrahlpumpe 11 geführt, die über eine Leitung 12 an einer Wasserpumpe 21 angeschlossen ist. Diese Wasserpumpe 21 saugt über eine in das Wasserbecken 2 geführte Rohrleitung 14 Wasser aus diesem Wasserbekken 2 an und presst es kontinuierlich zur Wasserstrahlpumpe 11. Von dieser Wasserstrahlpumpe 11 wird es beladen mit vom Boden des Schachtes 7 abgesaugten Ablagerungen durch eine Leitung 13 über ein Filter 15 gepresst, das sich in einer Abschirmkammer 16 befindet. In diesem Filter 15 werden die Ablagerungen abgefiltert, während das Wasser über eine Rohrleitung 17 und ein nicht dargestelltes besonderes Wasserbecken-Reinigungssystem wieder in das Wasserbecken 2 zurückgelangt. Die Abschirmkammer 16 schirmt die Umgebung gegen die radioaktive Strahlung ab, die von den im Filter 15 angesammelten Ablagerungen ausgeht. Zum Zwecke der Abschirmung der Umgebung gegen von den Ablagerungen ausgehende radioaktive Strahlung ist auch die Leitung 13 am Beckenrand durch ein Abschirmrohr 18 hindurchgeführt. Die Wasserpumpe 21 und die Abschirmkammer 16 sind sicherheitshalber in einer Wanne 19 ausgestellt. Die Abschirmkammer 16 ist endkonditionierfähig und kann nach vollständiger Füllung des Filters 15 mit radioaktiven Ablagerungen einer Endlagerung zugeführt werden.

Das aus einem Kernreaktor entladene bestrahlte Kernreaktorbrennelement 8 hängt mit einem Ende vertikal am Mast 20 einer dem Kernreaktor zugeordneten Lademaschine. Mit diesem Mast 20 wird es vertikal in den Schacht 7 eingeführt und anschliessend wieder aus diesem Schacht 7 herausgezogen. Hierbei passiert das Kernreaktorbrennelement 8 den oben an der Öffnung 5 des Schachtes 7 angebrachten Ultraschallschwinger. Der von diesem Ultraschallschwinger 9 ausgehende Ultraschall befreit die Oberfläche des Kernreaktorbrennelementes und insbesondere auch die Aussenfläche der Hüllrohre der Brennstäbe dieses Kernreaktorbrennelementes 8 von dort haftenden Ablagerungen. Da die Öffnung 5 des Schachtes 7 mit dem Wasserraum des Beckens 2 kommuniziert, wird ständig durch die Wasserstrahlpumpe 11 Wasser am Boden 6 des Schachtes 7 abgesaugt, und vom Brennelement 8 entfernte Ablagerungen werden unverzüglich vom abgesaugten Wasser mitgerissen.

Nach dem Herausziehen des Kernreaktorbrennelementes aus dem Schacht 7 kann dieses Kernreaktorbrennelement 8 mit Hilfe des Mastes 20 der Lademaschine im Wasserbecken 2 unter Wasser abgesetzt und gelagert werden.

Das in Fig. 2 dargestellte Wasserbecken 22 ist mit Wasser gefüllt, das einen Wasserspiegel 23 hat. Im Wasserraum des Wasserbeckens 22, d.h. unterhalb des Wasserspiegels 23 ist an einer Seitenwand des Wasserbeckens 22 ein aus Metall bestehender Hohlzylinder 24 mit vertikaler Längsachse angebracht, der am Boden 26 verschlossen und oben offen ist, d.h. eine Öffnung 25 hat. Dieser Hohlzylinder 24 bildet also einen über die Öffnung 25 mit dem Wasserraum des Wasserbeckens 22 kommunizierenden vertikalen Schacht 27 zum Einführen eines Kernreaktorbrennelementes 28, das mit einem Ende am Haken 30 einer Lademaschine hängt. Am Boden 26 des Hohlzylinders 24 mündet ein Absauganschluss 30 in den Schacht 27. Dieser Absauganschluss 30 ist zu einer Wasserstrahlpumpe 31 geführt, die über eine Leitung 32 an einer am Beckenrand aufgestellten Kreiselpumpe 41 angeschlossen ist. Mit einer weiteren Leitung 33 ist die Wasserstrahlpumpe 31 ebenfalls mit einem Filter 35 verbunden, das sich aussen am Beckenrand in einer Abschirmkammer 36 befindet. Aus Sicherheitsgründen sind sowohl die Kreiselpumpe 41 als auch die Abschirmkammer 36 in einer Wanne 39 aufgestellt. Ein in den Wasserraum des Wasserbeckens 2 mündendes Ansaugrohr 34 ist mit der Kreiselpumpe 41 verbunden. An dieser Kreiselpumpe 41 sind ausser der Wasserstrahlpumpe 31 noch Sprühdüsen 42 über Schlauchleitungen 43 angeschlossen. Diese Sprühdüsen 42 befinden sich oben am Hohlzylinder 24 in der Nähe der Öffnung 25 des Schachtes 27 und sind in den Schacht 27 gerichtet.

Die Kreiselpumpe 41 saugt durch die Rohrleitung 34 Wasser aus dem Wasserbecken 22 an und presst es sowohl durch die Leitung 32 und durch die Wasserstrahlpumpe 31 als auch durch die Schlauchleitungen 43 über die Sprühdüsen 42 in den Schacht 27. Das Brennelement 28 passiert beim Einführen in den Schacht 27 und beim Herausziehen aus diesem Schacht 27 der Länge nach die Sprühdüsen 42, so dass das aus diesen Sprühdüsen 42 auf das Brennelement 28 gerichtete Wasser insbesondere locker haftende Ablagerungen von der Oberfläche des Kernreaktorbrennelementes 28 d.h. insbesondere von der Aussenfläche der Hüllrohre der Brennstäbe abspült. Diese abgespülten Ablagerungen werden sofort über den Absauganschluss 30 aus dem Schacht 27 von der Wasserstrahlpumpe 31 abgesaugt und vom die Wasserstrahlpumpe 31 passierenden Wasser durch die Leitung 33 hindurch zum Filter 35 mitgerissen. Dort werden diese Ablagerungen ausgefiltert, während das gefilterte Wasser über eine Rohrleitung 37 in ein nicht dargestelltes Wasserbecken-Reinigungssystem und von dort wieder in das Wasserbecken 22 geleitet wird.

Günstig ist es, wenn die Sprühdüsen 42 hin und her bewegbar sind. Dadurch kann bewirkt werden, dass die von den Sprühdüsen 42 ausgehenden Wasserstrahlen im Schacht 27 auch zwischen die äusseren Brennstäbe des Kernreaktorbrennelementes 28 gelangen und an den inneren Brennstäben wirksam werden.

Wie beim Wasserbecken nach Fig. 1 kann auch die Abschirmkammer 36 des Wasserbeckens nach Fig. 2 nach vollständiger Füllung des Filters 35 mit radioaktiven Ablagerungen zusammen mit diesem Filter 35 einer Endlagerung zugeführt werden.

**Patentanspruch**

1. Wasserbecken zum Lagern von Kernreaktorbrennelementen mit einem Gerät zum Haltern eines Kernreaktorbrennelementes an einem Ende und Transportieren dieses Kernreaktorbrennelementes im Wasserbecken, dadurch gekennzeichnet, dass ein oben offenes und dort mit dem Wasserraum des Wasserbeckens (2; 22) kommunizierendes, am Boden (6; 26) geschlossenes Gefäss (4; 24) einen langgestreckten vertikalen Schacht (7; 27) zum Einführen eines Kernreaktorbrennelementes (8; 28) bildet, an dem oben zum Beseitigen von Ablagerungen von dem Kernreaktorbrennelement ein in den Schacht (7) abstrahlender Ultraschallschwinger (9) und/oder in den Schacht (27) gerichtete Sprühdüsen (42) für Wasser angebracht sind und der am Boden (6; 26) mit einem in den Schacht (7; 27) mündenden Absauganschluss (10; 30) versehen ist, dem eine Absaugpumpe (11; 31) und ein in einer Abschirmkammer (16; 36) befindliches Filter (15; 35) für aus dem Schacht (7; 27) abgesaugte Ablagerungen zugeordnet sind.

## Claim

1. A pool for storing nuclear reactor fuel elements, having a device which holds a nuclear reactor fuel element at one end and transports this nuclear reactor fuel element in the pool, characterised in that a vessel (4; 24) which is open at the top where it communicates with the water space of the pool (2; 22), and is closed at its base (6; 26) forms an elongate vertical shaft (7; 27) for the introduction of a nuclear reactor fuel element (8; 28) and at the top of which, for the removal of deposits from the nuclear reactor fuel element, is or are arranged an ultrasonic oscillator (9) which radiates into the shaft (7) and/or spray nozzles (42) for water which are directed into the shaft (27), and which is provided at its base (6; 26) with a suction connection (10; 30) which leads into the shaft (7; 27) and which is assigned a suction pump (11; 31), and a filter (15; 35) for deposits sucked out of the shaft (7; 27), arranged in a screening chamber (16; 26).

## Revendication

1. Piscine d'emmagasinage d'assemblages combustibles de réacteur nucléaire, comprenant un appareil pour supporter un assemblage combustible de réacteur nucléaire par l'une de ses extrémités et pour transporter cet assemblage combustible de réacteur nucléaire dans la piscine, caractérisée en ce qu'un récipient (4; 24) ouvert en haut, y communiquant avec l'espace réservé à l'eau de la piscine et fermé au fond (6; 26) forme un puits (7; 27) vertical, s'étendant en longueur, destiné à l'introduction d'un assemblage combustible de réacteur nucléaire (8; 28) sur la partie haute duquel sont montés, pour éliminer des dépôts de l'assemblage combustible de réacteur nucléaire, un émetteur d'ultrasons (9) émettant dans le puits (7) et/ou des buses de projection (42) d'eau dirigées dans le puits (27) et qui est muni au fond (6; 26) d'un raccord d'aspiration (10; 30) qui débouche dans le puits (7; 27) et auquel sont associés une pompe aspirante (11; 31) et un filtre (15; 35) se trouvant dans une chambre de blindage (16; 36) et destiné aux dépôts aspirés du puits (7; 27).

FIG 1

FIG 2